Europäisches Patentamt

European Patent Office

Office européen des brevets

(11) Numéro de publication : **0 294 286 B1**

# (12) FASCICULE DE BREVET EUROPEEN

(45) Date de publication du fascicule du brevet :
24.04.91 Bulletin 91/17

(51) Int. Cl.⁵ : **F16D 55/22, F16D 55/224**

(21) Numéro de dépôt : **88401323.6**

(22) Date de dépôt : **31.05.88**

(54) **Ressort pour frein à disque et frein à disque équipé d'un tel ressort.**

Demande divisionnaire 89202698.0 déposée le 31/05/88.

(30) Priorité : **02.06.87 FR 8707677**

(43) Date de publication de la demande :
**07.12.88 Bulletin 88/49**

(45) Mention de la délivrance du brevet :
**24.04.91 Bulletin 91/17**

(84) Etats contractants désignés :
**BE DE ES FR GB IT**

(56) Documents cités :
**EP-A- 0 190 956**
**EP-A- 0 203 841**

(56) Documents cités :
**DE-A- 3 533 931**
**FR-A- 2 295 300**
**GB-A- 2 012 012**
**GB-A- 2 150 241**

(73) Titulaire : **BENDIX EUROPE Services Techniques S.A.**
**126 rue de Stalingrad**
**F-93700 Drancy (FR)**

(72) Inventeur : **Pindat, Michel**
**59, Avenue Jean Lolive**
**F-93500 Pantin (FR)**

(74) Mandataire : **Lejet, Christian**
**Bendix Europe Service Techniques Service Brevets 126 rue de Stalingrad**
**F-93700 Drancy (FR)**

EP 0 294 286 B1

# Description

L'invention a pour objet un ressort pour frein à disque à étrier coulissant ainsi qu'un frein à disque équipé d'un tel ressort.

L'invention vise plus particulièrement un ressort destiné à équiper un frein à disque dont l'étrier coulisse par rapport à un support fixe au moyen d'au moins deux surfaces complémentaires de coulissement axial formées sur l'étrier et sur le support fixe et qui sont maintenues en contact par des moyens élastiques.

On connaît du brevet français 2.582.365 un ressort pour frein à disque du type comportant un étrier monté coulissant parallèlement à l'axe d'un disque tournant, sur un support fixe au moyen d'au moins deux surfaces de coulissement axial formées sur l'étrier et sur le support fixe et maintenues élastiquement en contact, et deux organes de friction reçus en ancrage et en coulissement axial dans une ouverture dudit support fixe pour venir en engagement de friction avec les faces opposées dudit disque, lors de l'actionnement d'un moteur de frein, ledit ressort étant monté élastiquement dans une ouverture formée dans la voûte de l'étrier et exerçant sur les plaques de support desdits organes de friction un effort radial dirigé sensiblement selon un rayon du disque et en direction de l'axe de ce dernier et un effort tangentiel perpendiculaire audit effort radial pour solliciter chacun des organes de friction tangentiellement à la circonférence dudit disque pour assurer le maintien de ces derniers dans une position latérale préférentielle. Ce ressort est caractérisé en ce qu'il est constitué d'une lame métallique pliée comportant une portion de montage reliée élastiquement par ses côtés circonférentiellement espacés à deux portions d'action rigide, une première portion rigide s'étendant parallèlement à l'axe du disque et susceptible de solliciter élastiquement par ses deux extrémités libres desdites plaques de support dans une direction sensiblement circonférentielle, une deuxième desdites portions rigides s'étendant également parallèlement à l'axe du disque et susceptible de solliciter élastiquement par ses deux extrémités libres lesdites plaques de support sensiblement radialement vers l'axe du disque.

Avec un tel agencement, le ressort maintenu par sa portion de montage dans l'ouverture formée dans la voûte de l'étrier sollicite par chacune de ses portions rigides les plaques de support, les liaisons élastiques entre la portion de montage et chacune des deux portions d'action rigide pouvant être modifiée à volonté pour obtenir les efforts radiaux et tangentiels voulus.

Chaque portion rigide du ressort décrit au brevet précité présente deux extrémités libres dont chacune s'appuie sur une plaque de support associée d'un organe de friction. L'usure progressive de celui-ci a pour effet de le rapprocher du plan médian du ressort du frein, ce qui déplace la plage de contact de la portion rigide avec la plaque de support, d'une extrémité libre de la portion rigide vers la partie médiane de celle-ci. Cette partie médiane se raccorde à la portion élastique associée du ressort suivant un profil qui donne à la partie rigide une largeur croissante, suivant l'axe du disque, d'une extrémité libre vers la partie médiane de la portion rigide. La plus grande largeur de cette partie a pour effet d'accroître localement sa raideur. Il en résulte que l'effort exercé par la portion rigide sur un organe de friction associé s'accroît en même temps que l'usure de la garniture de l'organe de friction. Le frottement qui en résulte lorsque le moteur du frein repousse les garnitures vers le disque lors d'un freinage, s'accroît donc avec l'usure des garnitures. Un frottement exagéré peut gêner le coulissement de l'étrier, au point de provoquer une usure dissymétrique des garnitures. Une telle usure est à éviter car elle entraîne un remplacement prématuré des organes de friction. En outre cette raideur accrue peut provoquer l'écrasement de la partie médiane de la portion rigide sous l'effort de réaction reçu des organes de friction. La déformation permanente du ressort qui en résulte est aussi à éviter.

Par ailleurs, lorsqu'on utilise un frein à disque équipé du ressort décrit au brevet précité, et qu'on retire les organes de friction du frein, par exemple pour les échanger contre des organes de friction neufs, on a observé qu'une extrémité libre d'au moins une des portions fixes du ressort peut venir porter sur un capuchon ou soufflet d'étanchéité en matière souple du piston du moteur de frein, capuchon qui s'étire vers le disque au fur et à mesure de l'usure de la garniture de l'organe de friction actionné directement par ce moteur de frein. Ce contact du ressort sur ce capuchon en matière souple peut provoquer une détérioration du capuchon et, par là, une perte d'étanchéité du moteur de frein.

La présente invention a donc pour but de réaliser un ressort pour frein à disque, du type décrit au brevet précité, qui ne présente pas les inconvénients mentionnés ci-dessus.

On atteint ce but de l'invention avec un ressort pour frein à disque du type comportant un étrier monté coulissant parallèlement à l'axe d'un disque tournant sur un support fixe et deux organes de friction reçus en ancrage et en coulissement axial dans une ouverture dudit support fixe, pour venir en engagement de friction avec les faces opposées du disque lors de l'actionnement d'un moteur de frein, ledit ressort étant monté élastiquement dans une ouverture formée dans la voûte de l'étrier, pour charger chacun des organes de friction, ce ressort étant constitué d'une lame métallique pliée comportant une portion de montage reliée par une portion élastique à au moins une portion d'action rigide s'étendant parallèlement à l'axe du disque pour solliciter élastiquement lesdits organes de friction, ressort caractérisé en ce qu'une fente transversale parallèle à la portion rigide est découpée dans la portion élastique à proximité de cette portion rigide, de manière à réduire la charge appliquée par le ressort aux organes de friction quand ceux-ci se rapprochent du plan médian du ressort du fait de l'usure de ces organes.

Pour éviter d'endommager le capuchon du moteur d'un frein équipé d'un ressort du type décrit en préambule, de préférence, une patte déborde de la portion d'action rigide de manière que, lorsque les organes de friction sont retirés du frein, cette patte bute élastiquement sur une surface du frein agencée pour maintenir la portion rigide à l'écart d'un contact avec une partie fragile du frein conformément à l'enseignement de la demande de brevet divisionnaire.

Au dessin annexé, donné seulement à titre d'exemple :

- la Figure 1 est une vue en élévation d'un frein à disque équipé d'un ressort suivant l'invention ;
- la Figure 2 est une vue en perspective qui illustre la coopération du ressort suivant l'invention avec les organes de friction du frein de la Figure 1 ;
- la Figure 3 est une vue en coupe partielle, suivant le trait de la coupe III-III de la Figure 1 ;
- la Figure 4 est une vue similaire à celle de la Figure 3, prise alors que le frein de la Figure 1 est débarrassé de ses organes de friction ;
- la Figure 5 est une vue partielle en coupe, suivant le trait de coupe V-V de la Figure 1, qui illustre le fonctionnement du ressort suivant l'invention et ;
- la Figure 6 est une vue analogue à celle de la Figure 5, qui illustre le fonctionnement d'un autre mode de réalisation du ressort suivant l'invention.

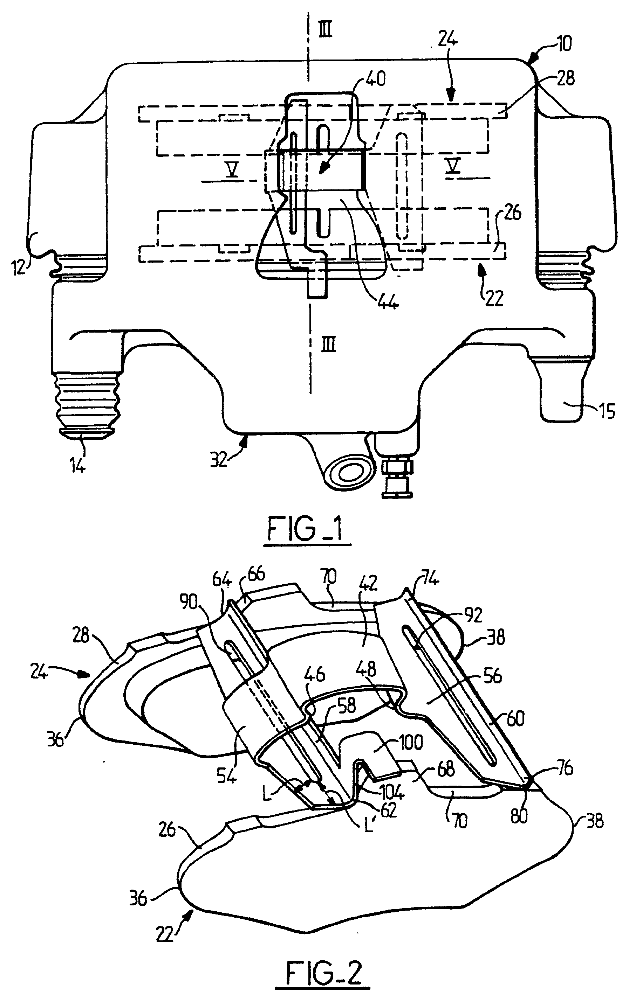

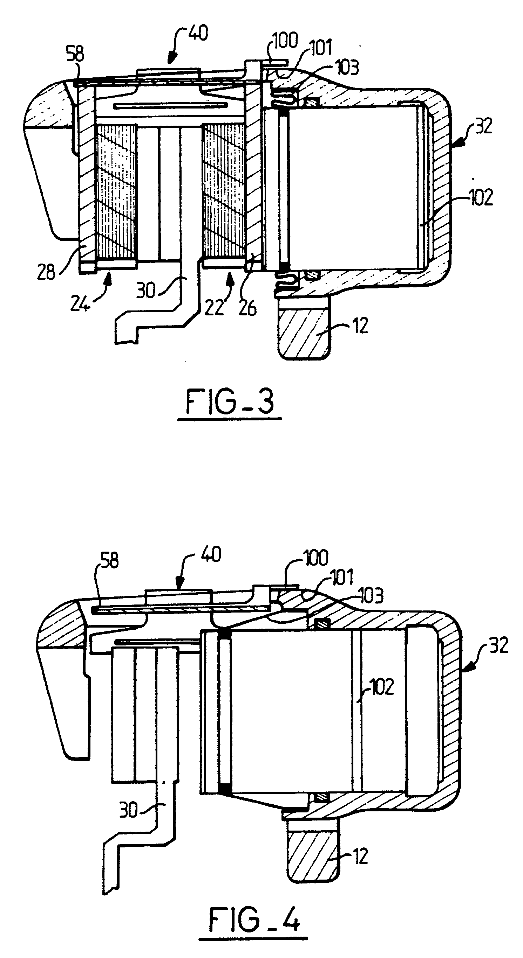

Le frein à disque représenté à la Figure 1 est du type comportant un étrier 10, monté coulissant sur un support fixe 12, au moyen de deux colonnettes axiales 14 et 15. Le frein à disque comporte en outre deux organes de friction 22 et 24, munis respectivement de plaques de support 26 et 28, susceptibles de venir en engagement de friction avec un disque tournant 30, (voir Figs. 3 et 4), lors de l'actionnement d'un moteur hydraulique de frein 32. Les organes de friction 22 et 24 sont reçus en ancrage et en coulissement dans une ouverture formée dans le support fixe 12. Dans l'exemple représenté, les deux organes de friction 22 et 24 ont chacun des extrémités 36 et 38 possédant un profil circulaire coopérant avec des profils circulaires complémentaires du support fixe 12. Un tel type d'organe de friction est décrit et représenté plus en détail dans le brevet européen EP-A-0 002 399. Pour ce type d'organe de friction, il est souhaitable d'exercer sur la plaque de support un effort tangentiel qui maintienne cette dernière dans une position latérale préférentielle, en appui dans l'ouverture ménagée dans le support fixe 12.

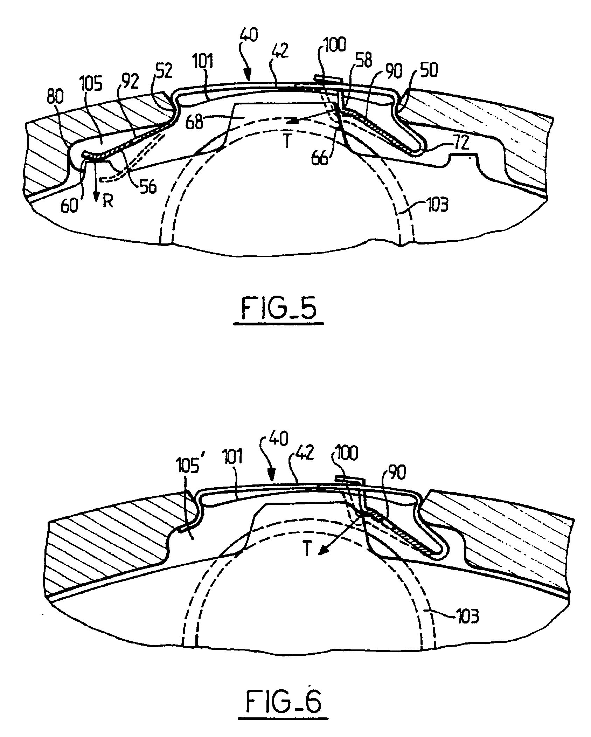

Le frein à disque représenté à la figure 1 est muni d'un ressort 40 réalisé selon la présente invention. Pour la description du ressort 40, on se reportera notamment aux figures 2 et 5. Le ressort 40 est constitué d'une lame métallique pliée qui comprend une portion de montage 42 ayant la forme générale de la lettre grecque oméga montée élastiquement dans une ouverture 44 formée dans la voûte de l'étrier 10. Les côtés circonférentiellement espacés 46 et 48 formant les parties resserrées de la lettre oméga coopèrent avec des bords circonférentiellement espacés 50 et 52 de l'ouverture 44. Les côtés circonférentiellement espacés 46 et 48 sont prolongés par des portions élastiques 54 et 56 respectivement. Ces portions élastiques 54 et 56 se terminent par deux portions rigides 58 et 60 qui s'étendent axialement de part et d'autres de la portion élastique correspondante 54 ou 56 respectivement. Une première portion rigide 58 associée à la portion élastique 54 présente deux extrémités libres 62, 64 qui sollicitent chacune des plaques support 26, 28 sensiblement circonférentiellement (voir Fig. 5), par coopération avec des surfaces d'appui 66 formées sur le flanc d'une saillie 68 formée sur le côté périphérique 70 de chacune des plaques support 26 et 28. Comme on le voit sur les Figures 2 et 5, la portion rigide 58 a la forme d'une gouttière, la portion élastique 54 correspondante formant un pli arrondi prononcé 72 (voir Fig. 5) de manière à permettre à la portion rigide 58 de solliciter la saillie 68 en dehors de la zone occupée par les organes de friction et par le disque. D'une façon similaire, la portion rigide 60 a la forme d'une gouttière et comporte deux extrémités libres 74 et 76 qui coopèrent avec des surfaces d'appui 80 sensiblement circonférentielles formées sur le côté périphérique 70 des plaques de support 26 et 28. En se reportant à la Figure 5, on voit que la première portion rigide 58, grâce au pli 72, exerce sur la surface 66 un effort sensiblement tangentiel T. D'une façon similaire, la deuxième portion rigide 60 exerce sur la surface 80, un effort sensiblement radial R.

Le rôle de ces deux efforts est expliqué en détail dans le brevet français n° 2.582.365 précité, auquel on pourra se reporter pour obtenir des précisions à ce sujet. D'une manière générale le ressort 40, encliqueté dans l'ouverture 44 de la voûte de l'étrier par sa portion en oméga assure, grâce à ces efforts, les fonctions de ressort anti-bruit et de maintien en position latérale préférentielle des organes de friction.

Avec le ressort décrit au brevet précité, on a observé cependant que l'effort exercé par les portions rigides, sur les plaques de support des organes de friction, s'accroît quand ces organes s'usent. En effet, les organes se rapprochent alors du plan médian du ressort et la partie de chaque portion rigide qui charge les plaques de support est celle qui se trouve en face de la portion élastique qui raccorde chaque portion rigide à la portion de montage 42. Du fait de l'élargissement de la portion rigide à ce niveau, la raideur du ressort et donc les efforts appliqués aux plaques de support, s'accroissent.

Il en résulte des effets négatifs. Tout d'abord, on observe alors un accroissement des frottements qui s'opposent au glissement des organes de friction et de l'étrier coulissant avec, pour conséquence possible, une usure dissymétrique des garnitures des organes de friction qui entraîne un remplacement prématuré de ces organes. En outre la réaction des organes de friction sur la partie du ressort qui présente une raideur accrue peut provoquer un écrasement de celle-ci, c'est-à-dire une déformation permanente du ressort. Il faut alors remplacer celui-ci.

Suivant la présente invention on supprime ces inconvénients en prévoyant dans le ressort, parallèlement à l'axe du disque sur lequel agit le frein de la figure 1, des fentes transversales 90, 92 formées au voisinage des portions rigides 58, 60, respectivement, du côté des portions élastiques 54, 56, respectivement (voir Figure 2). Ces fentes ont pour effet de diminuer la raideur du ressort dans sa partie centrale, au droit des portions élastiques 54 et 56. Les efforts appliqués aux plaques de support 26, 28 par le ressort lorsque les organes de friction se rapprochent du plan médian du ressort, au fur et à mesure de leur usure, sont alors diminués par rapport aux efforts qui seraient appliqués en l'absence de ces fentes. Cette diminution d'efforts permet d'éviter les inconvénients mentionnés ci-dessus.

Il faut noter en outre que, le poids des organes de friction diminuant quand leur usure s'accroît, on peut tenir compte de cette diminution dans l'ajustement de la raideur du ressort à l'aide de ces fentes, de manière à réduire encore les frottements qui s'opposent au bon fonctionnement du frein à disque équipé du ressort suivant l'invention. L'homme de métier saura tirer parti de cette observation pour ajuster correctement les dimensions et la position de ces fentes, par le simple jeu de ses connaissances normales. On notera à ce sujet que plus la distance "L" (voir figure 2) qui sépare une extrémité de la fente 90 du droit du contour de la portion élastique 54 par exemple, est petite, plus la raideur de la partie centrale de la portion rigide 58 est faible. De même, plus le rayon de courbure du pli arrondi 72 est grand, plus la portion rigide 58, dans son ensemble, prend de la souplesse.

On remarquera en outre, sur la figure 2, qu'une patte 100 déborde latéralement et verticalement d'une extrémité de la portion rigide 58 du ressort. En se référant aux figures 3 et 4 du dessin, il est clair que cette patte déborde du ressort du côté où se trouve le moteur de frein 32.

Sur la coupe axiale de la figure 3 qui représente un frein à disque équipé d'organes de friction, et du ressort suivant l'invention, il apparaît que cette patte est alors écartée de la surface supérieure 101 du moteur de frein 32, du fait de la réaction à l'effort T exercé sur la portion rigide 58 du ressort par les plaques support 26 et 28 (voir aussi la figure 5).

Le moteur de frein représenté en coupe aux Figs 3 et 4 comprend un piston 102 agencé pour agir sur la plaque de support 26 de l'organe de friction 22, lors d'un freinage. Un capuchon 103 en matière souple assure l'étanchéité du cylindre du moteur 32 qui reçoit le piston, lorsque ce dernier coulisse dans le cylindre pendant un freinage.

A la figure 4, le frein à disque est représenté sans ses organes de friction, le piston sorti et le capuchon 103 déployé, comme c'est le cas lorsqu'on intervient sur le frein pour remplacer des organes de friction usés. Dans cet état la portion rigide 58 du ressort 40 n'est plus repoussé vers le haut par les plaques de support sur lesquelles elle reposait avant l'extraction des organes de friction. Quand le ressort n'est pas muni de la patte 100, comme c'est le cas du ressort décrit au brevet précité, la portion rigide 58 peut venir alors s'appuyer accidentellement sur le capuchon 103 au risque de cisailler celui-ci du fait qu'il est constitué en une matière frangible telle qu'un caoutchouc synthétique.

La patte 100 permet d'éviter cet accident. Il apparaît en effet sur la figure 4 et sur la figure 5 (position repérée en trait interrompu) qu'en l'absence d'organes de friction, la patte vient reposer sur la surface supérieure 101 du moteur de frein en maintenant ainsi la portion rigide 58 du ressort à l'écart du capuchon 103 du moteur de frein.

Sur la figure 2 il apparaît que la patte 100 et la fente 90 sont formées de part et d'autre de la portion rigide 58. La patte déborde d'abord verticalement (du point de vue de la figure 2) de cette portion rigide par une partie de liaison sensiblement radiale 104, de la partie supérieure de laquelle s'étend l'extrémité plane et horizontale de la patte 100 proprement dite, qui déborde latéralement de la plaque de support 26 vers la surface supérieure 101 du moteur de frein 32.

La figure 6 est analogue à la figure 5 et représente un autre mode de réalisation du ressort suivant l'invention. Celui-ci se distingue de celui de la figure 5 en ce qu'il est simplifié par la suppression de la portion élastique 56 et de la portion rigide 60 qui applique, dans le mode de réalisation de la figure 5, des efforts sensiblement radiaux aux plaques de support. La suppression de ces efforts peut en effet être considérée comme acceptable avec une certaine orientation de l'effort appliqué par l'autre portion rigide du ressort sur la surface d'appui 66 modifiée en conséquence. En outre, la suppression de cette partie 56, 60 du ressort permet de réduire le logement 105 creusé dans la voûte de l'étrier 10 (voir Figure 5) pour permettre le débattement de cette partie. Dans le mode de réalisation de la fig. 6, la voûte 10 de l'étrier est alors creusée d'un logement 105' plus petit, ce qui a pour effet d'améliorer la robustesse du frein équipé du ressort suivant l'invention.

**Revendications**

1. Ressort (40) pour frein à disque du type comportant un étrier (10) monté coulissant, parallèlement à l'axe d'un disque tournant, sur un support fixe (12) et deux organes de friction (22, 24) reçus en ancrage et en coulissement axial dans une ouverture dudit support fixe (12), pour venir en engagement de friction avec les faces opposées du disque (30) lors de l'actionnement d'un moteur de frein (32), ledit ressort (40) étant monté élastiquement dans une ouverture (44) formée dans la voûte de l'étrier (10) pour charger chacun des organes de friction (22, 24) ce ressort (40) étant constitué d'une lame métallique pliée comportant une portion de montage (42) reliée par une portion élastique à au moins une portion d'action rigide (58, 60) s'étendant parallèlement à l'axe du disque (30) pour solliciter élastiquement lesdits organes de friction (22, 24), ressort caractérisé en ce qu'une fente transversale (90, 92) parallèle à la portion rigide (58, 60) est découpée dans la portion élastique (54, 56) à proximité de cette portion rigide (58, 60), de manière à réduire la charge appliquée par le ressort aux organes de friction quant ceux-ci se rapprochent du plan médian du ressort du fait de l'usure de ces organes.

2. Ressort conforme à la revendication 1, caractérisé en ce que la portion de montage (42) est relié par deux côtés circonférentiellement espacés (46, 48) à deux portions d'action rigides (58, 60) associées chacune à une portion élastique (54, 56) respectivement, percée d'une fente transversale (90, 92) respectivement, parallèlement à la portion d'action rigide.

3. Ressort conforme à la revendication 1, caractérisé en ce que la portion rigide (58) charge les organes de friction sensiblement tangentiellement.

4. Ressort conforme à la revendication 1, caractérisé en ce que la portion rigide (60) charge les organes de friction sensiblement radialement.

5. Ressort conforme à la revendication 2, caractérisé en ce que les portions rigides (58, 60) charge les organes de friction sensiblement tangentiellement et radialement, respectivement.

6. Ressort conforme à l'une quelconque des revendications précédentes, caractérisé en ce qu'une patte (100) déborde de la portion rigide (58) de manière que, lorsque les organes de friction sont retirés du frein, cette patte bute élastiquement sur une surface (101) du frein qui maintient la portion rigide à l'écart d'un contact avec une partie fragile du frein.

7. Ressort conforme à la revendication 6, caractérisé en ce que la patte (100) déborde d'une extrémité libre (62) de la portion rigide (58) qui est adjacente au moteur de frein (32) pour maintenir cette portion rigide à l'écart d'un capuchon (103) en matière frangible formant partie du moteur de frein.

8. Ressort conforme à la revendication 7, caractérisé en ce que la patte (100) s'étend, sensiblement parallèlement à l'axe du disque, au-delà de l'extrémité libre adjacente de la portion rigide, pour venir reposer sur une surface extérieure (101) du moteur de frein quand les organes de friction sont retirés du frein, cette patte étant raccordée à cette extrémité libre par une partie de liaison (104) sensiblement radiale.

**Ansprüche**

1. Feder (40) für Scheibenbremse einer Bauart mit einem an einem unbeweglichen Halter (12) parallel zur Achse einer drehbaren Scheibe gleitend angebrachten Bremssattel (10) und zwei Reibungselementen (22, 24), die von einer Öffnung des unbeweglichen Halters (12) auf verankerte und in axialer Richtung gleitende Weise aufgenommen werden, um mit den gegenüberliegenden Seiten der Scheibe (30) bei Betätigung eines Bremsmotors (32) in Reibschluß zu gelangen, wobei die Feder (40) in einer in der Deckenwölbung des Bremssattels (10) ausgebildeten Öffnung (44) elastisch angebracht ist, um jedes der Reibungselemente (22, 24) zu beanspruchen, wobei diese Feder (40) von einem gebogenen Metallplättchen gebildet wird, das einen Anbringungsbereich (42), der über einen elastischen Bereich mit wenigstens einem starr wirkenden Bereich (58, 60) verbunden ist, der sich parallel zur Achse der Scheibe (30) erstreckt, um die Reibungselemente (22, 24) elastisch zu belasten, enthält, wobei die Feder dadurch gekennzeichnet ist, daß im elastischen Bereich (54, 56) in der Umgebung des starren Bereichs (58, 60) ein zu diesem starren Bereich (58, 60) paralleler transversaler Schlitz (90, 92) ausgespart ist, um so die Beanspruchung zu verringern, die von der Feder auf die Reibungselemente ausgeübt wird, wenn sich diese aufgrund des Verschleisses dieser Elemente der Mittelebene der Feder nähern.

2. Feder gemäß Anspruch 1, dadurch gekennzeichnet, daß der Anbringungsbereich (42) mittels zweier Seiten (46, 48), die sich in Umfangsrichtung in einem Abstand befinden, mit zwei starr wirkenden Bereichen (58, 60) verbunden ist, die jeweils einem elastischen Bereich (54, 56), der parallel zum starr wirkenden Bereich von einem transversalen Schlitz (90, 92) durchlocht ist, zugeordnet sind.

3. Feder gemäß Anspruch 1, dadurch gekennzeichnet, daß der starre Bereich (58) die Reibungselemente im wesentlichen in tangentialer Richtung beansprucht.

4. Feder gemäß Anspruch 1, dadurch gekennzeichnet, daß der starre Bereich (60) die Reibungselemente im wesentlichen in radialer Richtung beansprucht.

5. Feder gemäß Anspruch 2, dadurch gekennzeichnet, daß die starren Bereiche (58, 60) die Reibungselemente im wesentlichen in tangentialer bzw. in radialer Richtung beanspruchen.

6. Feder gemäß einem der vorangehenden Ansprüche, dadurch gekennzeichnet, daß vom starren Bereich (58) ein Anschlag (100) so vorsteht, daß dieser Anschlag dann, wenn die Reibungselemente aus der Bremse herausgezogen werden, elastisch an einer Oberfläche (101) der Bremse anstößt, die den starren Bereich in einem Abstand zu einer Berührung mit einem zerbrechlichen Bereich der Bremse hält.

7. Feder gemäß Anspruch 6, dadurch gekennzeichnet, daß der Anschlag (100) über ein in der Nähe des Bremsmotors (32) befindliches freies Ende (62) des starren Bereichs (58) übersteht, um diesen starren Bereich in einem Abstand zu einer einen Teil des Bremsmotors bildenden Verschlußkappe (103) aus zerbrechlichem Material zu halten.

8. Feder gemäß Anspruch 7, dadurch gekennzeichnet, daß sich der Anschlag (100) im wesentlichen parallel zur Achse der Scheibe über das in der Nähe des starren Bereichs befindliche freie Ende hinaus erstreckt, um auf einer Außenfläche (101) des Bremsmotors aufzuruhen, wenn die Bremselemente aus der Bremse herausgezogen werden, wobei dieser Anschlag mit diesem freien Ende durch ein im wesentlichen radiales Verbindungsteil (104) verbunden ist.

**Claims**

1. Spring (40) for a disc brake of the type having a caliper (10) mounted on a fixed support (12), slideably parallel to the axis of a rotating disc, and two friction members (22, 24) received in an anchored and axially slideable manner in an orifice in the said fixed support (12), in order to come into frictional engagement with the opposite faces of the disc (30) during the actuation of a brake motor (32), the said spring (40) being mounted elastically in an orifice (44) made in the arch of the caliper (10) so as to load each of the friction members (22, 24), this spring (40) consisting of a bent metal leaf having a mounting portion (42) connected by means of an elastic portion to at least one rigidly acting portion (58, 60) extending parallel to the axis of the disc (30), in order to stress the said friction members (22, 24) elastically, this spring being characterized in that a transverse slit (90, 92) parallel to the rigid portion (58, 60) is cut out in the elastic portion (54, 56) near this rigid portion (58, 60), so as to reduce the load exerted by the spring on the friction members when these approach the mid-plane of the spring as a result of the wear of these members.

2. Spring according to Claim 1, characterized in that the mounting portion (42) is connected, by means of two sides (46, 48) arranged at a circumferential distance from one another, to two rigidly acting portions (58, 60) each associated with an elastic portion (54, 56) respectively having a transverse slit (90, 92) respectively parallel to the rigidly acting portion.

3. Spring according to Claim 1, characterized in that the rigid portion (58) loads the friction members substantially tangentially.

4. Spring according to Claim 1, characterized in that the rigid portion (60) loads the friction members substantially radially.

5. Spring according to Claim 2, characterized in that the rigid portions (58, 60) load the friction members substantially tangentially and radially respectively.

6. Spring according to any one of the preceeding claims, characterized in that a lug (100) projects from the rigid portion (58) in such a way that, when the friction members are removed from the brake, this lug comes elastically up against a brake surface (101) which keeps the rigid portion away from contact with a fragile part of the brake.

7. Spring according to Claim 6, characterized in that the lug (100) projects from a free end (62) of the rigid portion (58) which is adjacent to the brake motor (32), in order to keep this rigid portion away from a cap (103) made of breakable material and forming part of the brake motor.

8. Spring according to Claim 7, characterized in that the lug (100) extends substantially parallel to the axis of the disc beyond the adjacent free end of the rigid portion, to come to rest on an outer surface (101) of the brake motor when the friction members are removed from the brake, this lug being connected to this free end by means of a substantially radial connecting part (104).

FIG_1

FIG_2

FIG_3

FIG_4

FIG_5

FIG_6